# FASCICULE DE BREVET EUROPEEN

(11) **EP 3 457 472 B1**
(45) Date de publication et mention de la délivrance du brevet: **15.04.2020**
(21) Numéro de dépôt: 18194092.5
(22) Date de dépôt: 12.09.2018
(51) Int. Cl.: H01M 4/136, H01M 4/1397, H01M 4/58, H01M 4/62, H01M 10/052

(54) **PROCEDE DE FABRICATION D'UNE ELECTRODE POUR ACCUMULATEUR LITHIUM-SOUFRE UTILISANT DU LI2S COMME MATERIAU ACTIF**
HERSTELLUNGSVERFAHREN EINER ELEKTRODE FÜR EINEN LITHIUM-SCHWEFEL-AKKU, DER LI2S ALS AKTIVES MATERIAL VERWENDET
METHOD FOR MANUFACTURING A LITHIUM-SULPHUR BATTERY ELECTRODE USING LI2S AS AN ACTIVE MATERIAL

(30) Priorité: 15.09.2017 FR 1758590
(43) Date de publication de la demande: 20.03.2019
(73) Titulaire: Commissariat à l'énergie atomique et aux énergies alternatives, 75015 Paris (FR); Centre National de la Recherche Scientifique, 75794 Paris Cedex 16 (FR); Université Grenoble Alpes, 38400 Saint-Martin-d'Hères (FR); Institut Polytechnique de Grenoble, 38000 Grenoble (FR)
(72) Inventeur: ROBBA, Alice, 38000 GRENOBLE (FR); ALLOIN, Fannie, 38220 VIZILLE (FR); BARCHASZ, Céline, 38600 FONTAINE (FR); BOUCHET, Renaud, 38700 LA TRONCHE (FR); VINCENT, Rémi, 38000 GRENOBLE (FR)
(74) Mandataire: Brevalex

(56) Documents cités:
- WO-A1-2017/143549
- CN-A- 105 826 540
- CHAO WANG ET AL: "Slurryless Li 2 S/Reduced Graphene Oxide Cathode Paper for High-Performance Lithium Sulfur Battery", NANO LETTERS, vol. 15, no. 3, 5 février 2015 (2015-02-05), pages 1796-1802, XP055465443, ISSN: 1530-6984, DOI: 10.1021/acs.nanolett.5b00112

## Description

### DOMAINE TECHNIQUE

La présente invention a trait à un procédé de fabrication d'une électrode positive pour accumulateur électrochimique lithium-soufre utilisant du Li₂S comme matériau actif.

Le domaine général de l'invention peut ainsi être défini comme celui des dispositifs de stockage d'énergie, en particulier celui des accumulateurs électrochimiques au lithium et, encore plus particulièrement, des accumulateurs électrochimiques au lithium-soufre.

### ÉTAT DE LA TECHNIQUE ANTÉRIEURE

Les dispositifs de stockage d'énergie sont classiquement des accumulateurs électrochimiques fonctionnant sur le principe de cellules électrochimiques aptes à délivrer un courant électrique grâce à la présence dans chacune d'entre elles d'un couple d'électrodes (respectivement, une électrode positive et une électrode négative) séparé par un électrolyte, les électrodes comprenant des matériaux spécifiques aptes à réagir selon une réaction d'oxydoréduction, moyennant quoi il y a production d'électrons à l'origine du courant électrique et productions d'ions qui vont circuler d'une électrode à l'autre par le biais d'un électrolyte.

Des accumulateurs de ce type les plus usités actuellement sont les suivants :
*les accumulateurs Ni-MH utilisant de l'hydrure métallique et de l'oxyhydroxyde de nickel comme matériaux d'électrode ;
*les accumulateurs Ni-Cd utilisant du cadmium et de l'oxyhydroxyde de nickel comme matériaux d'électrode ;
*les accumulateurs Acide-Plomb utilisant du plomb et de l'oxyde de plomb PbO₂ comme matériaux d'électrode ; et
*les accumulateurs au lithium, tels que les accumulateurs lithium-ion, utilisant classiquement, en tout ou partie, des matériaux lithiés comme matériaux d'électrode.

Du fait que le lithium est un élément solide particulièrement léger et présente un potentiel électrochimique le plus faible, permettant ainsi l'accès à une densité d'énergie massique intéressante, les accumulateurs au lithium ont détrôné largement les autres accumulateurs mentionnés ci-dessus du fait de l'amélioration continue des performances des accumulateurs Li-ion en termes de densité d'énergie. En effet, les accumulateurs lithium-ion permettent d'obtenir des densités d'énergie massique (pouvant atteindre aujourd'hui près de 200 Wh.kg⁻¹) nettement supérieures à celles des accumulateurs Ni-MH et Ni-Cd (pouvant aller de 50 et 100 Wh.kg⁻¹) et Acide-plomb (pouvant aller de 30 à 35 Wh.kg⁻¹). Qui plus est, les accumulateurs Li-ion peuvent présenter une tension nominale de cellule supérieure à celle des autres accumulateurs (par exemple, une tension nominale de l'ordre de 3,6 V pour une cellule mettant en œuvre comme matériaux d'électrode le couple LiCoO₂/graphite contre une tension nominale de l'ordre de 1,5 V pour les autres accumulateurs susmentionnés). Ces systèmes présentent également une faible autodécharge et une durée de vie élevée (allant de 500 à 1000 cycles, par exemple).

De par leurs propriétés intrinsèques, les accumulateurs Li-ion s'avèrent donc particulièrement intéressants pour les domaines où l'autonomie est un critère primordial, tel que cela est le cas des domaines de l'informatique, de la vidéo, de la téléphonie, des transports tels que les véhicules électriques, les véhicules hybrides, ou encore des domaines médicaux, spatiaux, de la microélectronique. Toutefois, la technologie des accumulateurs lithium-ion voit aujourd'hui ses performances plafonner.

Actuellement, une nouvelle technologie d'accumulateur à base de lithium se profile comme une alternative prometteuse, cette technologie étant la technologie lithium-soufre, dans laquelle l'électrode positive comprend, comme matériau actif, du soufre élémentaire ou un dérivé du soufre, tel que du sulfure de lithium ou un polysulfure de lithium.

L'utilisation du soufre, comme matériau actif, d'une électrode positive est particulièrement attractive, car le soufre présente une capacité spécifique théorique très élevée pouvant être jusqu'à plus de 10 fois supérieure à celle obtenue pour des matériaux conventionnels d'électrode positive (de l'ordre de 1675 mAh/g pour le soufre au lieu de 140 mAh/g pour LiCoO₂). Qui plus est, le soufre est présent, de manière abondante, sur la planète et se caractérise, de ce fait par des coûts faibles. Enfin, il est peu toxique. Toutes ces qualités contribuent à le rendre particulièrement attractif en vue d'une mise en place à grande échelle, notamment pour les véhicules électriques, ce d'autant plus que les accumulateurs lithium/soufre peuvent permettre d'atteindre des densités d'énergie massique pouvant aller, théoriquement, jusqu'à 2600 Wh/kg.

D'un point de vue fonctionnel, la réaction à l'origine de la production de courant (c'est-à-dire lorsque l'accumulateur est en mode de décharge) met en jeu une réaction d'oxydation du lithium à l'électrode négative qui produit des électrons, qui vont alimenter le circuit extérieur auquel sont reliées les électrodes positive et négative, et une réaction de réduction du soufre à l'électrode positive.

Ainsi, de manière explicite, en processus de décharge, la réaction globale est la suivante :

S₈ + 16Li → 8Li₂S

qui est la somme de la réaction de réduction du soufre à l'électrode positive (Ss + 16e⁻ → 8S²⁻) et de la réaction d'oxydation du lithium à l'électrode négative (Li → Li⁺ + e⁻).

Il est entendu que les réactions électrochimiques inverses se produisent lors du processus de charge.

Comme il ressort de l'équation ci-dessus, la réaction implique un échange de 16 électrons, ce qui justifie la capacité spécifique élevée du soufre (1675 mAh.g⁻¹).

D'un point de vue mécanistique, et sans être lié par la théorie, à l'état initial (c'est-à-dire lorsque la batterie est à l'état de charge complet), la matière active, qui est du soufre élémentaire, est présente à l'état solide dans l'électrode positive. Au cours de la réduction du soufre, c'est-à-dire au cours de la décharge, les molécules cycliques de soufre sont réduites et forment des chaînes linéaires de polysulfures de lithium, de formule générale Li₂Sₙ, avec n pouvant aller de 2 à 8. Puisque la molécule de départ est S₈, les premiers composés formés sont les polysulfures de lithium à chaînes longues, tels que Li₂S₈ ou Li₂S₆. Ces polysulfures de lithium étant solubles dans les électrolytes organiques, la première étape de décharge consiste donc en la solubilisation de la matière active dans l'électrolyte et la production de polysulfures de lithium à chaînes longues en solution. Puis, au fur et à mesure que la réduction du soufre se poursuit, la longueur de chaîne des polysulfures est graduellement réduite et des composés tels que Li₂S₈, Li₂S₆ ou Li₂S₄ sont formés en solution. Enfin, le produit final de réduction est le sulfure de lithium (Li₂S), qui, lui, est insoluble dans les électrolytes organiques. Ainsi, la dernière étape du mécanisme de réduction du soufre consiste en la précipitation du matériau actif soufré Li₂S.

Toutefois, les accumulateurs lithium-soufre peuvent présenter un certain nombre d'inconvénients, dont notamment une mauvaise cyclabilité . En effet, au cours des cycles de charge et de décharge, l'électrode positive subit de profonds changements morphologiques induit par le mécanisme de décharge.

Comme évoqué ci-dessus, ce mécanisme passe tout d'abord par une étape de dissolution du matériau actif, ce qui entraîne, en premier lieu, un effondrement de la structure initiale de l'électrode poreuse en raison du pourcentage important de soufre dans l'électrode. Après dissolution du soufre, la porosité de l'électrode est telle que la structure ne peut être maintenue et s'effondre. La surface disponible d'électrode est ainsi diminuée et des grains de matériau ou de composite carbone/liant peuvent être désolidarisés du support constitué par le collecteur de courant. Cet endommagement et cette perte de surface active résultante s'avèrent cruciaux en fin de décharge, car les espèces formées, en particulier Li₂S, sont à la fois très isolantes et insolubles dans l'électrolyte organique. Par conséquent, elles précipitent à l'électrode positive et sont responsables de sa passivation progressive. Or, l'épaisseur de matière déposée étant limitée à quelques nanomètres (Li₂S isolant et donc passivant), le dépôt d'une quantité importante de matériau actif dépend donc de la surface spécifique conductrice d'électrode disponible.

De plus, le composé final de décharge Li₂S est deux fois plus volumineux que le soufre, ce qui peut également contribuer à la pulvérisation de la structure d'électrode positive en fin de décharge. En conclusion, les cycles de dissolution/précipitation du matériau actif inhérents au mécanisme de décharge sont donc en partie responsables de la faible capacité pratique restituée et de la faible tenue en cyclage des accumulateurs lithium-soufre.

Une autre raison de la mauvaise tenue en cyclage peut être également l'utilisation du lithium métallique comme matériau constitutif de l'électrode négative, la présence du lithium métallique pouvant engendrer la formation de dendrites métalliques lors du processus de recharge, lesquels dendrites pouvant occasionner des problèmes de sécurité.

Pour pallier ce dernier inconvénient, certains auteurs ont proposé de remplacer le matériau actif de l'électrode positive, qui est habituellement du soufre, par un matériau soufré et lithié : le sulfure de lithium Li₂S. La source de lithium est ainsi contenue dans le matériau actif de l'électrode positive, ce qui permet de se passer de l'utilisation de lithium métallique au niveau de l'électrode négative. Par ailleurs, la solubilité de Li₂S dans l'éthanol ouvre la voie vers de nouvelles mises en œuvre simples d'électrodes positives. Cette option a notamment été explorée par Wang et al. (C. Wang, X. Wang, Y. Yang, A. Kushima, J.Chen, Y. Huang and J.Li, Nano. Lett., 2015, 15, 1796-1802) qui ont réalisé des électrodes positives pour batteries lithium-soufre comprenant des sphères nanométriques de Li₂S cristallisées sur des feuilles d'oxyde de graphène. Toutefois, si ce type d'électrodes présente de bonnes performances électrochimiques, celles-ci ne sont pas uniquement dues à la constitution intrinsèque de l'électrode mais aussi à la présence d'un additif lithié et soufré dans l'électrolyte, plus spécifiquement, un additif du type polysulfure de lithium Li₂S₈. La présence de cet additif permet non seulement d'ajouter du matériau actif dans l'électrolyte et ainsi de gonfler les performances électrochimiques (notamment, au niveau de la capacité restituée en décharge) mais également de favoriser l'activation du Li₂S lors de la charge et ainsi son activité électrochimique.

Les auteurs de la présente invention se sont donc proposé de mettre au point un nouveau procédé de préparation d'une électrode positive pour batterie lithium-soufre, qui utilise, comme matériau actif, du Li₂S et qui permette de s'affranchir, une fois en fonctionnement, de l'utilisation d'additifs du type Li₂S₈ dans l'électrolyte et également de l'utilisation de lithium métallique pour la constitution de l'électrode négative.

### EXPOSÉ DE L'INVENTION

Ainsi, l'invention a trait à un procédé de préparation d'une électrode positive pour batterie lithium-soufre comprenant les étapes suivantes :
a) une étape de préparation d'un premier mélange par mise en contact d'un additif carboné du type noir de carbone et/ou carbone activé, d'un liant organique carboné et d'un solvant ;
b) une étape de carbonisation dudit premier mélange, moyennant quoi il résulte une poudre comprenant des agglomérats de noir de carbone et/ou de carbone activé ;
c) une étape de mise en contact de la poudre obtenue en b) avec une poudre de Li₂S formant ainsi un deuxième mélange ;
d) une étape de fusion de la poudre de Li₂S du deuxième mélange, moyennant quoi il résulte une poudre composite comprenant des agglomérats de noir de carbone et/ou de carbone activé et des particules de Li₂S ;
e) une étape de mise en dispersion de la poudre obtenue en d) dans un liant organique ;
f) une étape de dépôt de la dispersion obtenue en e) sur un substrat, qui est un matériau comprenant des fibres de carbone ou un feuillard métallique; et
g) une étape de séchage de ladite dispersion ainsi déposée.

Ainsi, le procédé de l'invention comprend, tout d'abord une étape de préparation d'un premier mélange par mise en contact d'un additif carboné du type noir de carbone et/ou carbone activé, d'un liant organique carboné et d'un solvant.

L'additif carboné du type noir de carbone et/ou carbone activé est notamment destiné à assurer la conduction électrique au sein de l'électrode positive.

A titre d'exemples de noir de carbone, on peut citer les noirs de carbone vendues sous les marques Ketjenblack® (AzkoNobel), par exemple, Ketjenblack® EC-600 JD, Vulcan® (Cabot), Super-P® (Timcal).

Concernant le carbone activé, il s'agit, avantageusement, d'un carbone à structure poreuse constitué de particules sphéroïdales de quelques micromètres de diamètre (et plus spécifiquement, de 2 à 15 micromètres et encore plus spécifiquement de l'ordre de 10 micromètres) comprenant des pores (spécifiquement de 1 à 100 nm et, encore plus spécifiquement de 10 à 50 nm) et à forte surface spécifique développée avec typiquement une surface spécifique allant de 800 à 1800 m²/g.

Les liants organiques carbonés sont avantageusement des polymères présentant une haute teneur en carbone, par exemple, une teneur en carbone supérieure à 50% et peuvent être, par exemple, des résines phénoliques, qui résultent, classiquement, de la polycondensation d'un monomère phénolique et du formaldéhyde, ce qui leur vaut d'être aussi appelées résines phénol-formaldéhydes ou résines formophénoliques.

D'autres liants que les résines phénoliques peuvent convenir tels que des liants cellulosiques (tel qu'une carboxyméthylcellulose), des liants époxydes, des liants polyacétates (tel qu'un polyacétate de vinyle).

Concernant le solvant, il peut s'agir d'eau, d'un solvant organique, tel qu'un solvant alcoolique ou un mélange de solvants organiques ou encore d'un mélange comprenant un ou plusieurs solvants organiques et de l'eau.

Les proportions de ces ingrédients dans le premier mélange peuvent être les suivantes :
- de 5 à 50% en masse pour l'additif du type noir de carbone et/ou carbone activé ;
- de 1 à 20% en masse pour le liant organique carboné ; et
- de 50 à 98% en masse pour le solvant ;
le pourcentage en masse étant exprimé par rapport à la masse totale des ingrédients.

Le procédé de l'invention comprend, ensuite, une étape de carbonisation du premier mélange obtenu à l'étape a), qui va permettre l'élimination du liant organique carboné et du solvant et ne laisser subsister de ces composés que du carbone, par exemple du carbone amorphe, lequel va assurer le rôle de ciment entre les particules de noir de carbone et/ou de carbone activé formant ainsi une poudre comprenant des agglomérats de noir de carbone et/ou de carbone activé. Qui plus est, cette étape peut permettre la formation de particules exclusivement carbonées présentant une surface spécifique importante (par exemple, supérieure à 1000 m²/g).

L'étape de carbonisation est réalisée, avantageusement, sous atmosphère inerte, par exemple, sous atmosphère d'argon, pour éviter tout phénomène d'oxydation. Qui plus est, elle est réalisée, classiquement, à une température et un durée efficaces nécessaires à la transformation en carbone des composés organiques, cette température et cette durée pouvant être fixées aisément par l'homme du métier en analysant par des techniques classiques, la composition du produit obtenu, le chauffage pouvant être arrêté dès lors que seul du carbone subsiste dans le mélange.

A titre d'exemple, l'étape de carbonisation peut être réalisée à une température allant de 800 à 1500°C pendant une durée allant de 1 minute à 10 heures.

Pour accélérer le processus de carbonisation, l'étape de carbonisation en tant que telle peut être précédée d'une étape de séchage du premier mélange obtenu en a) pour éliminer au moins en partie le solvant suivie d'une étape de broyage du matériau séché sous forme de grains.

De cette étape de carbonisation subsiste une poudre constituée de particules résultant de l'agglomération du noir de carbone et/ou carbone activé lié par du carbone amorphe issu de la carbonisation.

La poudre ainsi formée est ensuite mise en contact, de préférence, sous atmosphère inerte, avec une poudre de Li₂S. Cette poudre de Li₂S peut être une poudre nanométrique ou micrométrique, dont les particules présentent un diamètre moyen de particules inférieur à 40 µm, une telle poudre pouvant être disponible dans le commerce.

Le rapport massique entre la poudre de Li₂S et la poudre issue de l'étape de carbonisation peut être supérieur à 3 et, par exemple, peut être égal à 3,5.

Cette étape de mise en contact peut être accompagnée d'un broyage concomitant, auquel cas cette étape peut s'effectuer dans un broyeur, par exemple, un broyeur à jarre, ce qui permettra d'obtenir un mélange intime des ingrédients mais aussi d'obtenir une bonne granulométrie de la poudre, afin de simplifier la mise en dispersion ultérieure.

Entre l'étape de formation du deuxième mélange et l'étape de mise en dispersion, le procédé comprend une étape consistant à porter, de préférence sous atmosphère inerte, le deuxième mélange à une température supérieure à la température de fusion de Li₂S (par exemple, une température de 1100°C). Une fois la fusion du Li₂S obtenue, la température est, avantageusement, ramenée à la température ambiante. A l'issue de l'étape d), il est obtenu ainsi un mélange intime (dit également poudre composite) entre la poudre de noir de carbone et/ou carbone activé et les particules de Li₂S. Qui plus est, ce traitement thermique permet d'améliorer le réseau percolant des électrodes obtenues en favorisant le contact Li₂S/carbone.

La poudre obtenue à l'étape d) est ensuite mise en dispersion dans un liant organique, lequel liant organique peut être en solution dans un solvant organique ou un solvant aqueux.

Concernant le liant organique, il peut être choisi parmi :
- des liants polymériques appartenant à la catégorie des poly(oxydes d'éthylène) (connus sous l'abréviation POE) ;
- des liants polymériques appartenant à la catégorie des polymères éthyléniques fluorés, tel que du polytétrafluoroéthylène (connu sous l'abréviation PTFE) ou du polyfluorure de vinylidène (connu sous l'abréviation PVDF);
- des liants polymériques appartenant à la catégorie des polymères vinyliques, tels qu'un poly(alcool vinylique) (connu sous l'abréviation PVA) ; et
- des mélanges de ceux-ci.

Le liant organique peut permettre la cohésion entre les différents ingrédients de la poudre obtenue en d), une fois l'électrode positive achevée.

Le liant organique peut être présent, dans la dispersion, à hauteur d'une teneur allant de 5 à 30% de la masse totale des ingrédients de la dispersion (hors solvant, le cas échéant), une teneur spécifique avantageuse étant de 10%.

La dispersion ainsi obtenue est ensuite soumise à une étape de dépôt sur un substrat, qui peut être un matériau comprenant des fibres de carbone ou un feuillard métallique.

Plus spécifiquement, le matériau comprenant des fibres de carbone peut être un matériau poreux comprenant un enchevêtrement de fibres de carbone, lequel matériau va constituer une partie intégrante de l'électrode positive et va permettre, du fait de son aspect fibrillaire, d'absorber les contraintes mécaniques liées à son expansion volumique au cours du cyclage.

A titre d'exemple, ce matériau peut être un non-tissé de fibres de carbone.

Plus spécifiquement, le feuillard métallique peut être un feuillard en aluminium.

Le substrat ainsi recouvert est ensuite soumis à une étape de séchage, de sorte à éliminer les composés organiques volatils de la dispersion.

Le produit résultant du procédé est une électrode positive pour accumulateur lithium-soufre et est destiné à être assemblé dans un accumulateur lithium-soufre comprenant au moins un cellule comprenant :
- une électrode positive obtenue selon le procédé de l'invention tel que défini ci-dessus ;
- une électrode négative ; et
- un électrolyte conducteur d'ions lithium disposé entre ladite structure et ladite électrode négative.

Nous précisons les définitions suivantes.

Par électrode positive, on entend, classiquement, dans ce qui précède et ce qui suit, l'électrode qui fait office de cathode, quand l'accumulateur débite du courant (c'est-à-dire lorsqu'il est en processus de décharge) et qui fait office d'anode lorsque l'accumulateur est en processus de charge.

Par électrode négative, on entend, classiquement, dans ce qui précède et ce qui suit, l'électrode qui fait office d'anode, quand l'accumulateur débite du courant (c'est-à-dire lorsqu'il est en processus de décharge) et qui fait office de cathode, lorsque l'accumulateur est en processus de charge.

L'électrode négative peut être autosupportée (c'est-à-dire ne nécessitant pas d'être apposée à un support, tel qu'un support collecteur de courant) ou peut comprendre, de préférence, un substrat collecteur de courant sur lequel est placé au moins le matériau actif de l'électrode négative, ce matériau actif n'étant, avantageusement, pas du lithium métallique mais, préférentiellement, du silicium, du graphite ou du carbone dur. L'absence de lithium métallique pour constituer le matériau actif de l'électrode négative permet de s'orienter ainsi vers des batteries plus sûres.

Le substrat collecteur de courant peut être en un matériau métallique (composé d'un seul élément métallique ou d'un alliage d'un élément métallique avec un autre élément), se présentant, par exemple, sous forme d'une plaque ou feuillard, un exemple spécifique d'un substrat collecteur en courant pouvant être un feuillard en inox, en nickel ou en cuivre. Le substrat collecteur de courant peut être également en un matériau carboné.

L'électrolyte est un électrolyte conducteur d'ions lithium, cet électrolyte pouvant être, en particulier, un électrolyte liquide comprenant au moins un solvant organique et au moins un sel de lithium.

Le ou les solvants organiques peuvent être, par exemple, un solvant comportant une ou plusieurs fonctions éther, nitrile, sulfone et/ou carbonate avec, par exemple, une chaîne carbonée pouvant comporter de 1 à 10 atomes de carbone.

A titre d'exemples de solvants comportant une fonction carbonate, on peut citer :
- des solvants carbonates cycliques, tel que le carbonate d'éthylène (symbolisé par l'abréviation EC), le carbone de propylène (symbolisé par l'abréviation PC) ;
- des solvants carbonates linéaires, tels que le carbonate de diéthyle (symbolisé par l'abréviation DEC), le carbonate de diméthyle (symbolisé par l'abréviation DMC), le carbonate d'éthylméthyle (symbolisé par l'abréviation EMC).

A titre d'exemple de solvants comportant une fonction éther, on peut citer les solvants éthers, tels que le 1,3-dioxolane (symbolisé par l'abréviation DIOX), le tétrahydrofurane (symbolisé par l'abréviation THF), le 1,2-diméthoxyéthane (symbolisé par l'abréviation DME), ou un éther de formule générale CH₃O-[CH₂CH₂O]ₙ-OCH₃ (n étant un entier allant de 1 et 10), tel que le diméthyléther de tétraéthylèneglycol (symbolisé par l'abréviation TEGDME) et les mélanges de ceux-ci.

De préférence, le solvant organique est un solvant éther ou un mélange de solvants éthers.

Le sel de lithium peut être choisi dans le groupe constitué par LiPF₆, LiClO₄, LiBF₄, LiAsF₆, Lil, LiNO₃ LiR_{f}SO₃ (avec R_{f} correspondant à un groupe perfluoroalkyle comprenant de 1 à 8 atomes de carbone), LiN(CF₃SO₂)₂ (appelé également bis[(trifluorométhyl)sulfonyl]imidure de lithium correspondant à l'abréviation LiTFSI), LiN(C₂F₅SO₂)₂ (appelé également bis[(perfluoroéthyl)sulfonyl]imidure de lithium correspondant à l'abréviation LiBETI), LiCH₃SO₃, LiB(C₂O₄)₂ (appelé également bis(oxalato)borate de lithium ou LiBOB) et les mélanges de ceux-ci, la préférence portant sur un mélange LiTFSl/LiNO₃.

Le sel de lithium peut être présent, dans l'électrolyte, selon une concentration allant de 0,25 M à 2 M, par exemple, 1M.

Dans les accumulateurs lithium-soufre, l'électrolyte liquide susmentionné peut être amené à imprégner un séparateur, lequel est disposé entre l'électrode positive et l'électrode négative de la cellule électrochimique.

Ce séparateur peut être en un matériau poreux, tel qu'un matériau polymérique, apte à accueillir dans sa porosité l'électrolyte liquide.

L'électrolyte peut être également un électrolyte gélifié, ce qui correspond, dans ce cas, à un électrolyte comprenant un solvant organique et un sel de lithium, similaires à ceux décrits ci-dessus, qui imprègne une matrice poreuse qui gonfle en absorbant l'électrolyte, une telle matrice pouvant être un polyoxyde d'éthylène (connu sous l'abréviation POE), un polyacrylonitrile (connu sous l'abréviation PAN), un polyméthacrylate de méthyle (connu sous l'abréviation PMMA) ou un polyfluorure de vinylidène (connu sous l'abréviation PVDF) et leurs dérivés.

L'invention va, à présent, être décrite en référence aux modes de réalisation particuliers définis ci-dessous en référence aux figures annexées.

### BRÈVE DESCRIPTION DES DESSINS

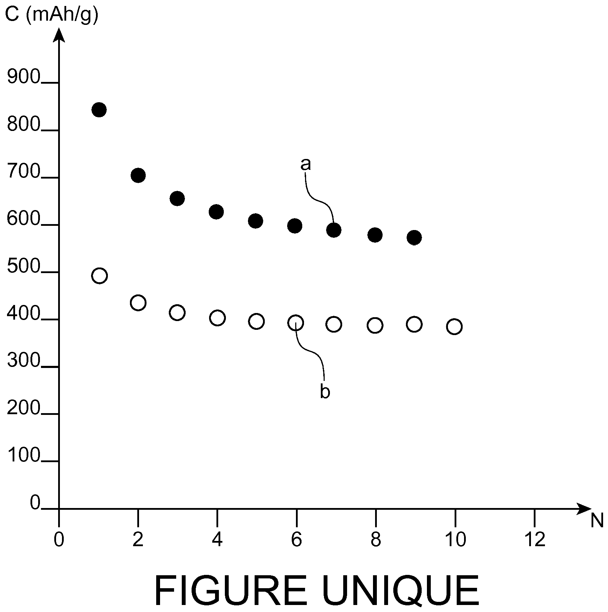

La figure unique est un graphique illustrant l'évolution de la capacité de décharge (en mAh/g) en fonction du nombre de cycles de deux accumulateurs mis en œuvre selon l'exemple ci-dessous.

### EXPOSÉ DÉTAILLÉ DE MODES DE RÉALISATION PARTICULIERS

### Exemple

Le présent exemple illustre la préparation d'une électrode positive conformément au procédé de l'invention.

Pour ce faire, il est préparé un premier mélange par mise en contact de 400 g d'éthanol, de noir de carbone Ketjenblack® EC-600 JD (4 g) et de résine phénolique (1 g). Après agitation du mélange à 4000 tours/min pendant 15 minutes, l'éthanol est évaporé pour obtenir un matériau sec.

Le matériau ainsi obtenu est réduit en grains pour être carbonisé dans un four tubulaire à 950°C sous argon pendant 1 heure. Cette étape permet de transformer la résine phénolique en carbone et de lier entre eux les particules de noir de carbone, le matériau résultant présentant une surface active importante (supérieure à 1000 m²/g selon la méthode BET) et étant ainsi exclusivement composé de carbone.

Le matériau carboné ainsi obtenu est ensuite mélangé avec du Li₂S pendant 1 heure dans un broyeur à jarre, moyennant quoi l'on obtient un mélange homogène. Le ratio massique de mélange entre Li₂S et le carbone est de 3,5/1.

Le mélange est ensuite soumis à un traitement thermique de 1100 °C pendant 1 heure sous atmosphère inerte, ce qui permet de fondre le Li₂S.

Le mélange ainsi obtenu à l'issue de ce traitement thermique est utilisé pour la fabrication d'une composition liquide (ou encre) comprenant 90% massique dudit mélange et 10% massique de polyoxyde d'éthylène à 3% dans du 1,4-dioxane.

La composition ainsi formulée est ensuite imprégnée sur un feutre de carbone et séchée à 40°C sous argon.

A titre comparatif, une électrode positive de référence est réalisée à partir d'un même feutre de carbone avec une composition comprenant :
- 70% massique de soufre élémentaire ;
- 20% de noir de carbone Super P® ;
- 10% de polyoxyde d'éthylène ;
suivie d'un séchage à 80°C sous air.

Deux accumulateurs sont assemblés avec respectivement l'électrode positive conforme au procédé de l'invention et l'électrode positive de référence.

Chacun de ces accumulateurs comporte, en outre:
- comme électrode négative, une électrode constituée d'un feuillard de lithium métallique ;
- comme électrolyte, un mélange diméthyléther de tétraéthylèneglycol/dioxolane (TEGDME/DIOX) (1:1 en volume) comprenant du LiTFSI (1 M) et du LiNO₃ (0,1 M).

Pour ces deux accumulateurs a été déterminée l'évolution de la capacité de décharge (en mAh/g) en fonction du nombre de cycles, les résultats étant reportés sur la figure unique jointe en annexe (courbe a) pour l'accumulateur comportant l'électrode positive obtenue conformément au procédé de l'invention et courbe b) pour l'accumulateur comportant l'électrode positive de référence).

Il ressort que l'accumulateur comportant l'électrode positive obtenue conformément au procédé de l'invention présente de meilleures performances en termes de capacité de décharge que l'accumulateur comportant l'électrode de référence.

## Revendications

1. Procédé de préparation d'une électrode positive pour batterie lithium-soufre comprenant les étapes suivantes :
a) une étape de préparation d'un premier mélange par mise en contact d'un additif carboné du type noir de carbone et/ou carbone activé, d'un liant organique carboné et d'un solvant ;
b) une étape de carbonisation dudit premier mélange, moyennant quoi il résulte une poudre comprenant des agglomérats de noir de carbone et/ou de carbone activé ;
c) une étape de mise en contact de la poudre obtenue en b) avec une poudre de Li₂S formant ainsi un deuxième mélange ;
d) une étape de fusion de la poudre de Li₂S du deuxième mélange, moyennant quoi il résulte une poudre composite comprenant des agglomérats de noir de carbone et/ou de carbone activé et des particules de Li₂S ;
e) une étape de mise en dispersion de la poudre obtenue en d) dans un liant organique ;
f) une étape de dépôt de la dispersion obtenue en e) sur un substrat, qui est un matériau comprenant des fibres de carbone ou un feuillard métallique; et
g) une étape de séchage de ladite dispersion ainsi déposée.

2. Procédé selon la revendication 1, dans lequel le liant organique carboné est une résine phénolique.

3. Procédé selon la revendication 1 ou 2, dans lequel l'étape de carbonisation est réalisée sous atmosphère inerte.

4. Procédé selon l'une quelconque des revendications précédentes, dans lequel l'étape de carbonisation est précédée d'une étape de séchage du premier mélange obtenu en a) pour éliminer au moins en partie le solvant suivie d'une étape de broyage du matériau séché sous forme de grains.

5. Procédé selon l'une quelconque des revendications précédentes, dans lequel la poudre de Li₂S est une poudre nanométrique ou micrométrique.

6. Procédé selon l'une quelconque des revendications précédentes, dans lequel l'étape c) est accompagnée d'un broyage concomitant.

7. Procédé selon l'une quelconque des revendications précédentes, dans lequel l'étape c) est réalisée sous atmosphère inerte.

8. Procédé selon l'une quelconque des revendications précédentes, dans lequel le matériau comprenant des fibres de carbone est un non-tissé de fibres de carbone.

9. Procédé selon l'une quelconque des revendications précédentes, dans lequel le feuillard métallique est un feuillard en aluminium.

## Patentansprüche

1. Verfahren zur Herstellung einer positiven Elektrode für eine Lithium-Schwefel-Batterie, umfassend die folgenden Schritte:
a) einen Schritt des Herstellens einer ersten Mischung durch Inkontaktbringen eines Kohlenstoffadditivs vom Typ Kohlenstoffschwarz und/oder aktivierter Kohlenstoff, eines organischen Kohlenstoffbinders und eines Lösungsmittels;
b) einen Schritt der Karbonisierung der ersten Mischung, woraus ein Pulver resultiert, das Agglomerate von Kohlenstoffschwarz und/oder von aktiviertem Kohlenstoff umfasst;
c) einen Schritt des Inkontaktbringens des in b) erhaltenen Pulvers mit einem Li₂S-Pulver, wodurch somit eine zweite Mischung gebildet wird;
d) einen Schritt des Schmelzens des Li₂S-Pulvers der zweiten Mischung, woraus ein Verbundpulver resultiert, das Agglomerate von Kohlenstoffschwarz und/oder von aktiviertem Kohlenstoff und Li₂S-Partikel umfasst;
e) einen Schritt des Dispergierens des in d) erhaltenen Pulvers in einem organischen Binder;
f) einen Schritt des Aufbringens der in e) erhaltenen Dispersion auf ein Substrat, das ein Material ist, welches Kohlenstofffasern oder ein metallisches Band umfasst; und
g) einen Schritt des Trocknens der derart aufgebrachten Dispersion.

2. Verfahren nach Anspruch 1, bei dem der organische Kohlenstoffbinder ein Phenolharz ist.

3. Verfahren nach Anspruch 1 oder 2, bei dem der Schritt des Karbonisierens in einer Inertatmosphäre durchgeführt wird.

4. Verfahren nach einem der vorhergehenden Ansprüche, bei dem dem Schritt des Karbonisierens ein Schritt des Trocknens der in a) erhaltenen ersten Mischung vorhergeht, um wenigstens teilweise das Lösungsmittel zu entfernen, gefolgt von einem Schritt des Zerkleinerns des getrockneten Materials in Form von Körnern.

5. Verfahren nach einem der vorhergehenden Ansprüche, bei dem das Li₂S-Pulver ein nanometrisches oder mikrometrisches Pulver ist.

6. Verfahren nach einem der vorhergehenden Ansprüche, bei dem der Schritt c) von einer gleichzeitigen Verkleinerung begleitet wird.

7. Verfahren nach einem der vorhergehenden Ansprüche, bei dem der Schritt c) in einer Inertatmosphäre durchgeführt wird.

8. Verfahren nach einem der vorhergehenden Ansprüche, bei dem das Material, das Kohlenstofffasern umfasst, ein Vlies aus Kohlenstofffasern ist.

9. Verfahren nach einem der vorhergehenden Ansprüche, bei dem das metallische Band ein Band aus Aluminium ist.

## Claims

1. Method for preparing a positive electrode for a lithium-sulfur battery, comprising the following steps:
a) a step of preparing a first mixture by placing a carbon additive which is carbon black and/or activated carbon; a carbon organic binder, and a solvent in contact;
b) a step of carbonising said first mixture, by means of which the result is a powder comprising agglomerates of carbon black and/or activated carbon;
c) a step of placing the powder obtained in b) in contact with a powder of Li₂S thus forming a second mixture;
d) a step of melting the powder of Li₂S of the second mixture, by means of which the result is a composite powder comprising agglomerates of carbon black and/or activated carbon and particles of Li₂S;
e) a step of dispersing the powder obtained in d) in an organic binder;
f) a step of depositing the dispersion obtained in e) on a substrate, which is a material comprising carbon fibres or a metal strip; and
g) a step of drying said dispersion thus deposited.

2. Method according to claim 1, wherein the carbon organic binder is a phenolic resin.

3. Method according to claim 1 or 2, wherein the carbonisation step is carried out in an inert atmosphere.

4. Method according to any one of the previous claims, wherein the step of carbonisation is preceded by a step of drying the first mixture obtained in a) in order to at least partly eliminate the solvent followed by a step of grinding the dried material in the form of grains.

5. Method according to any one of the previous claims, wherein the powder of Li₂S is a nanometric or micrometric powder.

6. Method according to any one of the previous claims, wherein step c) is accompanied by concomitant grinding.

7. Method according to any one of the previous claims, wherein step c) is carried out in an inert atmosphere.

8. Method according to any one of the previous claims, wherein the material comprising carbon fibres is a nonwoven fabric of carbon fibres.

9. Method according to any one of the previous claims, wherein the metal strip is a strip made of aluminium.
